# EUROPEAN PATENT APPLICATION

(11) **EP 1 947 541 A1**
(43) Date of publication of application: **23.07.2008**
(21) Application number: 07100894.0
(22) Date of filing: 22.01.2007
(51) Int. Cl.: G05B 19/418

(54) **A method and an apparatus for programming a work cell including one or more devices**

(71) Applicant: Hedelind, Mikael, 722 21 Västeras (SE)
(72) Inventor: Hedelind, Mikael, 722 21 Västeras (SE)
(74) Representative: Reyier, Ann-Mari

(57) **Abstract**

The invention relates to a method and an apparatus for programming a work cell including one or more devices The device apparatus comprises a memory location (20) for storing a set of actions related to the devices and program code for carrying out the actions, a graphical user interface (30) displaying said actions and allowing a user to select for each device one or more sequences of actions related to the device. The graphical user interface further allows a user to specify a start criterion for each of the sequences. The start criterion includes one or more conditions to be fulfilled in order to start executing the sequence. The apparatus further comprises a sequence handler generator (36) generating for each device a sequence handler (38-41) adapted to detect whether the start criterion of any of the sequences associated with the device is fulfilled, and to execute the sequence if the start criterion is fulfilled and all the other sequences associated with the device is idle.

## Description

### FIELD OF THE INVENTION AND PRIOR ART

The present invention relates to a method for programming a work cell including one or more devices. The invention also relates to an apparatus for programming the workcell. More specifically, the invention relates to programming of a work cell including one or more industrial robots.

A work cell in a factory usually includes a plurality of devices cooperating with each other to perform a pre-defined task. Examples of devices are mechanical units such as robots, external axes of the robot, positioners, conveyers and fixtures. Some of the devices in the work cell are I/O control, which means that the devices are controlled in response to input and output signals to the devices. Within industry today, there exists many different standards for how to program a work cell. Each vendor of robotics has to develop their own programming language used to program their robots. Also several third parties software and languages have been developed for the same purpose. A problem in connection with programming the work cell is that different devices is programmed in different ways, and often based on different programming languages,

The work cells often include different types of robots and equipment. Each robot and equipment is programmed separately. This means that software, representing the basic logic in the work cell, often is distributed over a plurality of different devices, such as programs for a personal computer, programs for a PLC system, and robot programs for robot controllers. To enable an overview over what is happening in the work cell, it is necessary to put together all those different programs. This may cause trouble when the work cell is rebuilt. When the robot cell is rebuilt it is often necessary to make change in one or more of the programs, and it is necessary to see to that the changes are made in accordance with each other, and that the different devices still are able to communicate with each other. Another problem with distributing the programming is that it is difficult for an operator, who is new in relation to the work cell, to understand which event or events control a certain action in the work cell.

Today, most software and programming systems are developed for a single purpose, or for usage in a limited context. Accordingly, there is a lack of generic multipurpose solutions where the same software or working network can be applied to several applications.

The patent document US 5623592 discloses a method and an apparatus for constructing an iconic sequence to operate a plurality of external devices. From this document it is known to control several external devices from one and the same computer with one program, which is based on programming by means of icons. The icons are displayed on a display device responsive to input from a user. The icons may represent program instructions, which when executed by the apparatus cause the external devices to perform a series of operations. The method and apparatus that is described in this patent is designed to be used for carrying out experiments with external devices, but not associated with robotics.

The patent document US 5576946 discloses a control system for creating and controlling a manufacturing process using computer on screen icons, as metaphors for actual process steps. The icons are selected on a screen from a library of icons. Each icon represents a discrete process step. Using the icons, the physical manufacturing process is symbolically assembled on screen. During actual operation, a graphic representation of the manufacturing process is displayed on a screen. This document shows the possibility to collect and return data to external business systems with the same program that is controlling the manufacturing equipment. A drawback with the mentioned prior art programming methods is that it is difficult for an operator to understand which event or events control a certain action in the work cell.

### OBJECTS AND SUMMARY OF THE INVENTION

The object of the present invention is to provide an attractive solution to the above-mentioned problems and to further facilitate programming of a work cell including different types of devices.

According to one aspect of the invention this object is achieved with a method as defined in claim 1.

Such a method comprises: storing for each of the devices one or more actions related to the device and program code for carrying out the actions, generating a graphical user interface displaying said actions and allowing a user to specify for each device one or more sequences of actions related to the device, and to specify a start criterion for each of the sequences, the start criterion including one or more conditions to be fulfilled in order to start executing the sequence, and generating for each device a sequence handler adapted to detect whether the start criterion of any of the sequences of the device is fulfilled, and to execute the sequence if the start criterion is fulfilled and all the other sequences associated with the device is idle.

The actions are, for example, actions to be carried out by the device, such as start and stop a conveyer, move the robot to a specified position, open or close a gripper carried by the robot, or general actions such as wait a certain time. The program code for different actions can be written in different programming languages in dependence on which device to be programmed. According to the invention, a graphical user interface displays the actions and allows a user to specify for each device one or more sequences of actions related to the device. Each sequence of actions includes a start criterion having one or more conditions, which has to be fulfilled in order to start execution of the sequence. This makes it possible to specify a plurality of sequences of actions for each device, which are executed when defined conditions are fulfilled.

Each device has its own sequence handler, the purpose of which is to detect when the start criterion is fulfilled for any of the sequences, and to execute the sequence upon detecting that the start criterion is fulfilled. However, a sequence is only executed if no other sequence is under execution, i.e. all the other sequences associated with the device must be idle. This is to ensure that only one sequence controlling each device is executed at a time. If any of the other sequences associated with the device is under execution, the sequence handler will not execute the sequence, even though the start criterion of the sequence is fulfilled. This is to avoid that the device will receive contradictory orders. As each device is provided with its own sequence handler, the devices are independently controlled.

The invention enables event driven programming of the devices in the work cell. An example of a condition to be fulfilled, in order to fulfill the start criterion, is the status of input signals to the devices, or to the robot.

The invention provides a method for a user to set up and control a work cell including a plurality of different devices. The invention also provides a graphical interface, which visualizes the program such that an operator easily can understand what is happening in the cell. The invention makes it possible to centralize the basic logic for controlling the devices of the work cell at one place, for example on an external computer, such as a personnel computer. However, it is not necessary to centralize all the logic in the work cell. The essential is to gather the over-arching logic. Some of the devices can still have built in logic, for example, control of robot movements, and easy logic for a gripper.

Preferably, one of the devices in the work cell is an industrial robot and at least some of the actions include carrying out robot movements. Then, the program code associated with the actions includes robot programs. Preferably, each robot program includes a simple robot movement. The user can put together the robot programs to a larger robot program by selecting among the predefined actions. The robot program can, for example, be stored centralized in an external computer together with program code for carrying out actions of the other devices in the cell, or at the robot controller. If the robot programs are stored on the robot controller, the external computer must be provided with information on the stored robot programs and how to start and stop execution of the robot programs.

According to an embodiment of the invention, the method comprises connecting the external computer to the controller of the robot, reading controller data including information on robot programs stored in the robot controller, and displaying actions representing the robot programs on said graphical user interface. This embodiment makes it possible to store the robot program on the robot controller and to read controller data, including information of the robot programs, to an external computer that displays actions representing the robot programs to the user. This embodiment makes it possible to load the robot controller with a plurality of preprogrammed robot movements written in a suitable robot language. The external computer can simply connect to the robot controller and read information on the available robot programs, and accordingly there is no need to read the entire robot programs to the external computer.

According to an embodiment of the invention, the devices include one or more I/O control devices, and the actions include actions for controlling the I/O controlled devices. The user can create a sequence of actions for each of the I/O controlled devices in the work cell by selecting among the predefined actions. The work cell may include robots as well as I/O control devices. The robots are programmed by creating one or more sequences of actions for each of the robots, and the I/O control devices are programmed by creating one or more sequences of actions for each of the devices. Accordingly, it is possible to program the robots as well as the I/O controlled devices without having any knowledge of the different program languages needed for programming the devices and robots.

According to another embodiment of the invention, the method comprises storing a plurality of actions which is not related to any of the devices and program code for carrying out the actions, displaying the actions on the graphical user interface, allowing a user to create one or more event sequences including the actions which is not related to the devices by selecting among said displayed actions, creating a start criterion for each of the event sequences including one or more conditions to be fulfilled in order to start executing the event sequence, and generating one or more event sequence handlers adapted to detect if the start criterion of any of the event sequences is fulfilled and to execute the event sequence if the start criterion is fulfilled. This embodiment makes it possible to program sequences of actions, which are not related to any of the devices, such as turning on and off operating lamps, or reading data from external systems. As soon as the start criterion is fulfilled for any of the sequences, the sequence is executed. Hence, a plurality of event sequences can be executes at the same time. A single event sequence handler can handle all the event sequences that are not connected to the devices. The event sequence handler starts execution of an event sequence upon detecting that the start criterion of the sequence is fulfilled, independent on whether or not any of the other event sequences is executed at the some time.

According to an embodiment of the invention, the method comprises storing a plurality of icons representing the actions and displaying the icons on the graphical user interface and thereby allowing the user to create one or more sequences of actions by selecting among the icons. Although it is possible to display text strings representing the actions, having icons representing the actions makes it easier for the user to program the work cell. Preferably, an icon is provided representing the start criterion of the sequence. This icon is displayed on the graphical user interface and allows a user to specify the conditions to be fulfilled in order to start execution of the sequence through the icon. This embodiment facilitates the programming of the start criterion by providing predefined icons including options for the conditions to be fulfilled in order to start execution of the sequence. This embodiment also makes it easier for a user to understand what is controlling a certain event in the work cell. Further, it is easy to change the start criterion for a certain sequence by simply changing one or more of the conditions through the icon on the interface.

According to an embodiment of the invention, the created sequences are displayed on the graphical user interface in the form of flow diagrams including the icons. This embodiment makes it easy for an operator to follow the flow in the programs sequences and accordingly to understand what the programs are doing. It is easy for the operator to get an overview of the overall program flow without knowing anything about the details in the programming.

It is easy to realize that the method according to the invention, as defined in the appended set of method claims, is suitable for execution by a computer program having instructions corresponding to the steps in the inventive method will run on a processor unit.

According to a further aspect of the invention, the object is achieved by a computer program product directly loadable into the internal memory of a computer or a processor, comprising software code portions for performing the steps of the method according to the appended set of method claims, when the program is run on a computer. The computer program is for example provided on a computer readable medium or through a network.

According to another aspect of the invention, the object is achieved by a computer readable medium having a program recorded thereon, when the program is to make a computer perform the steps of the method according to the appended set of method claims, and the method is run on the computer.

According to still another aspect of the invention, the object is achieved by an apparatus for programming the work cell including one or more devices according to claim 11.

Such an apparatus comprises a memory location for storing a set of actions related to the devices and program code for carrying out the actions, a graphical user interface displaying the actions and allowing a user to select for each device one or more sequences of actions related to the device. The graphical user interface further allows a user to specify a start criterion for each of the sequences, the start criterion including one or more conditions to be fulfilled in order to start executing the sequence. The apparatus further comprises a sequence handler generator generating for each device a sequence handler adapted to detect whether the start criteria of any of the sequences associated with the device is fulfilled, and to execute the sequence if the start criterion is fulfilled and all the other sequences associated with the device are idle.

Further developments of the apparatus are characterized by the features of the additional claims.

### BRIEF DESCRIPTION OF THE DRAWINGS

The invention will now be explained more closely by the description of different embodiments of the invention, and with reference to the appended figures.
Fig. 1 shows an example of an apparatus according the invention operatively connected to a plurality of devices in a work cell.
Fig. 2 shows a block diagram over an apparatus for programming a work cell according to one embodiment of the invention.
Fig. 3 shows an example of a work cell including a plurality of devices.
Fig. 4 shows an example of a sequence of actions including a start criterion.
Fig. 5 shows another example of a sequence of actions including a start criterion.
Fig. 6 shows a flow diagram over a method for programming a work cell according to one embodiment of the invention.

### DETAILED DESCRIPTION OF PREFERRED EMBODIMENTS OF THE INVENTION

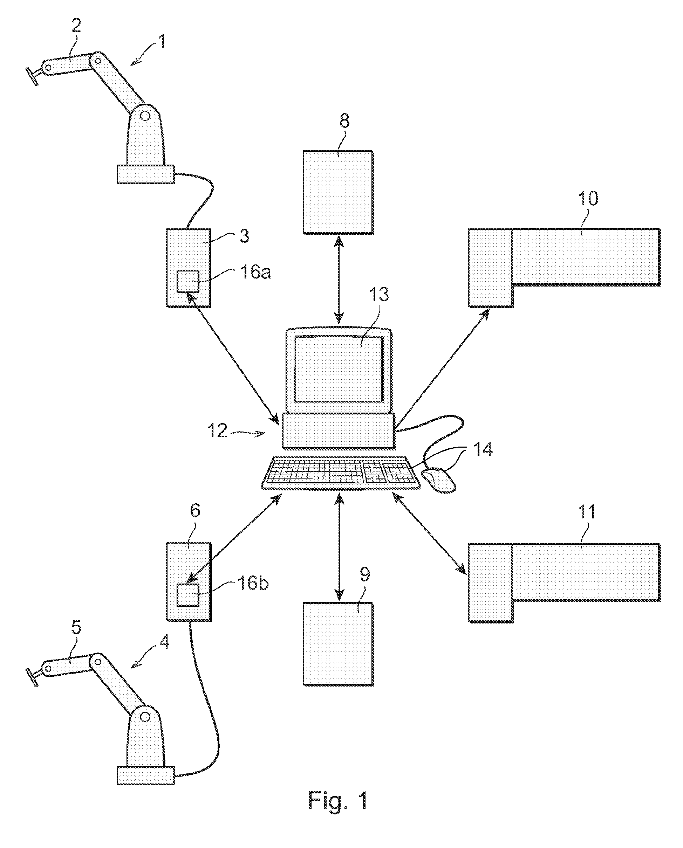

Figure 1 shows an example of an apparatus according the invention operatively connected to a plurality of devices in a work cell. In this example, the devices comprise a first industrial robot 1, including a manipulator 2 and a robot controller 3 connected to the manipulator and adapted to control the movements of the manipulator 2, a second industrial robot 4, including a manipulator 5 and a robot controller 6, a first and a second fixture 8, 9, and two conveyers 10,11. Each of the devices is I/O controlled and is connected to an apparatus 12 for programming the work cell, in this example, an external computer. The computer 12 is, for example, a personnel computer (PC), and comprises a display device 13, in this case a display screen, and input means 14, in this case a keyboard and a mouse. The computer 12 is adapted to display icons on the display device 13 responsive to input from the input means 14. The computer 12 is caused to display symbols representing the devices in the work cell on the display device. The computer 12 is also caused to display icons representing programmable actions on the display device. Some of the icons represent programmable action to be carried out by the devices in the work cell. A sequence of icons can be constructed in response to user inputs by the input device. Further, icons representing start criteria for the sequences are displayed on the display screen. Each sequence of actions must include a start criterion and one and more icons representing actions. The computer 12 is adapted to generate control signals to the devices in responsive to the icon sequence.

Each of the devices in the work cell is operatively connected to the computer 12. The connection can be wired or wireless, and the communication can be point-to-point or through a network. In order to be able to read data from a device and send orders to it, it is necessary to have a well-defined interface to it. In order to allow the computer 12 to communicate with the robot controllers, each of the controllers is provided with a communication interface 16a-16b adapted to communicate with the computer 12. The conveyers and the fixtures communicate via I/O signals and thus do not need any specially designed communication interfaces for communication with the apparatus 12. The computer 12 is also provided with communication interfaces (not shown in the figure) for communication with the devices. The connections to the robot controllers are more sophisticated than the other I/O controlled equipment. More data can be read from the robot controller and program code will be sent onto the robot controller. To achieve this, a plug-in solution has been implemented at the computer 12 that allows the user to access the robot controller through plug-in interfaces. Thus, the plug-in interface makes it possible to use any type of robot and robot controller as long as the user may implement the communication interface plug-in. This enables flexibility when deciding which type of robot and robot controller to use in the work cell.

All devices in the work cell that are I/O controlled or provided with a communication interface for communicating with the apparatus, can be programmed by the apparatus according to the invention.

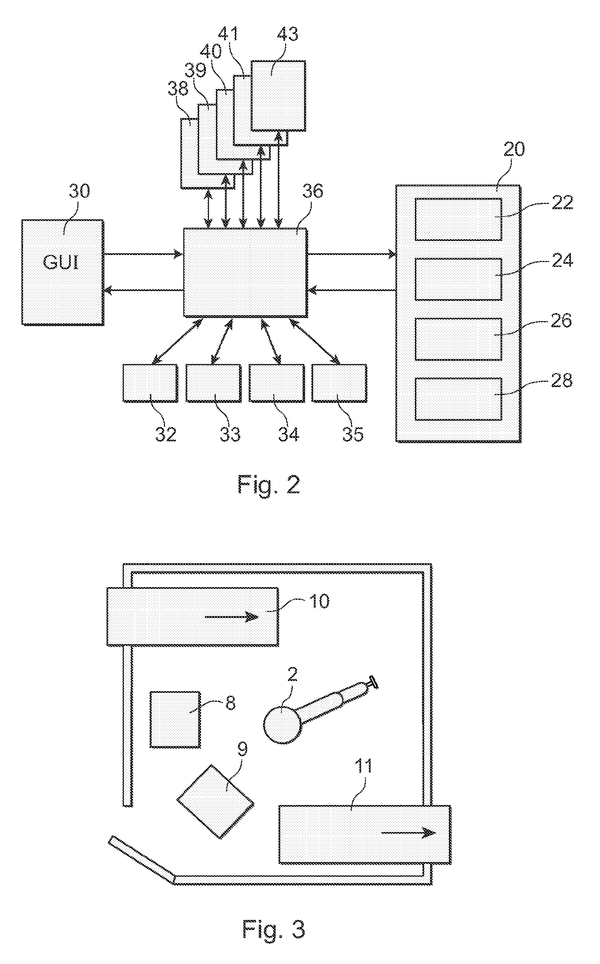

Figure 2 shows a functional block diagram over the apparatus 12 for programming the workcell shown in figure 1. The apparatus comprises a memory location 20 including a library containing a part 22 for storing descriptions of eligible devices and symbols representing the eligible devices. The description may include information on how to communicate with the device, how to read status of the device, information on I/O signals, and the position and rotation of the device. Another part 24 of the library is adapted to store information on icons representing programmable actions, such as icons representing programmable actions coupled to a certain device in the work cell, icons representing programmable actions coupled to a certain peripheral equipment or system, icons representing general programmable actions which are not related to any particular device, and icons representing start criteria for the sequences of actions. The library part 24 also includes rules for how a program is to be built up and information on possible settings for the devices.

Further, the library includes a part 26 adapted to store program code for carrying out the actions. It is not necessary to store all the program code for carrying out the actions in the library part 26. For the robots, it is suitable to store the program code, i.e. the robot programs, in the robot controller and only store a reference to the robot program, such as the names of the eligible robot programs, in the library part 26. However, it is suitable to store program code for carrying out general actions, which are not related to any particular device, in the library part 26. The stored program code can be written in different programming languages. Further, the memory location 20 includes a library part 28 for storing user applications including information on programmed sequences of actions for the devices. A user application includes a computer program for performing a certain task in the robot cell and all information necessary for executing the program. The computer program of the user application includes programmed sequences of actions.

The apparatus comprises a graphical user interface (GUI) 30 displaying the icons and symbols on the display device 13, thereby allowing a user to select devices of the work cell and to program sequences of actions. The graphical user interface further allows a user to specify a start criterion for each of the sequences. The start criterion includes one or more conditions, which has to be fulfilled in order to start execution of the sequence. The apparatus is further provided with a plurality of interface units 32-35 adapted to communicate with each of the devices in the work cell. For example, one or more of the interface units are adapted to communicate with the robot controllers.

The apparatus further comprises a sequence handler generator 36 adapted to generate sequence handlers. For each device chosen by the user, the sequence handler generator 36 generates a sequence handler associated with the chosen device. If the user chooses to add a device to the work cell, the sequence handler generator generates a new sequence handler responsible for the new device. The apparatus shown in figure 2 is configured to program four devices. Accordingly, the apparatus includes four communication interfaces 32-35 for communicating with the respective devices, and four sequence handlers 38-41 for handling sequences of the respective devices. If the user decides to delete a device from the work cell, the sequence handler generator 36 removes the corresponding sequence handler.

For each new device added to the work cell a new sequence handler is created. All the sequence handlers are identical. As soon as the user selects to drag and drop a symbol representing a robot or an I/O-controlled device, a new sequence handler is generated for the selected device.

The function of the sequence handler is to detect if the start criterion of any of the sequences associated with the device is fulfilled, and to start execution of the sequence as soon as the start criterion is fulfilled and no other sequence associated with the device is under execution at the moment. Sequence handlers of different devices operate independently of each other. Thus, the sequence handler controls execution of the program code for carrying out the programmed actions. If the program code is stored in the memory location 20 of the apparatus 12, the program code is executed on the apparatus. If the program code is stored in the robot controller, the program code is executed on the robot controller. In that case, the sequence handler sends commands to the robot controller about start and stop execution of the robot programs. The commands include information on which program to be executed.

It is also possible to generate sequences of actions, which are not related to any of the devices. Those sequences are in the following denoted event sequences and are handled by an event sequence handler 43. The sequence handler generator 36 generates an event sequence handler 43 when the creation of a new user application is started. It is possible to create different user applications including different sequences of actions for the devices. Information on the user applications is stored in the memory location 20 in the library part 28. The user application includes all settings made by the user.

As each device is provided with a sequence handler it is possible to run the devices in parallel. Only one sequence is allowed to be executed at the time for each device. However, the event sequences, which are not related to any device, can be executed as soon as the start criteria is fulfilled independent on whether the other sequences are executed simultaneously or not.

When the user starts the creation of a new application, a view of the work cell is drawn up on a work area on the display device using drag and drop technique. Any number of robot controllers and peripheral equipment can be placed in the work cell. Each robot controller can be connected to any number of robots, which can all be controlled by the apparatus. Figure 3 shows an example of a view of a work cell including one manipulator 2, two fixtures 8, 9 and two conveyers 10, 11. The conveyer 10 is an in-conveyer transporting work objects to the work cell, and the conveyer 11 is an out-conveyer transporting finished objects from the work cell. Examples of I/O signals for the conveyers are start conveyor and stop conveyor, also signals may be assigned to ascend or descend mechanical stops on the conveyor. All the devices in the work cell are I/O controlled and can thus be programmed by the apparatus according to the invention. The apparatus may program any number of devices in the work cell. The only restriction on the apparatus is computer resources and the execution time needed, i.e. the capacity of the processor of the computer. Any type of robot controller can be programmed thanks to plug-in interfaces that can be implemented by any user.

The method for using the apparatus comprises several operations, such as the creation of a new empty work space, drag and drop of symbols representing I/O controlled devices, robot controllers, and peripheral equipment into the work space, connect the apparatus to the robot controllers and read controller data from the controllers, create programs for the robots and the I/O control devices, verify the programs, and start production. During production, the apparatus will support the user by displaying information and options for operating the work cell. The apparatus will also help the user in case of a break down or unplanned system halt by providing the operator with different options for a safe restart.

A sequence of actions can be connected to each of the devices in the workspace. Each device will have its own sequence handler executing the program code. This enables the different devices to run in parallel. A program containing a set of sequences of actions can be created for each of the devices in the work cell. Each sequence has a start criterion defining when the sequence may start to execute. There are two types of programs, the purpose programs and the event programs. The purpose programs are created for the devices of the work cell. Each purpose program is connected to a specific device and has its own sequence handler. The event programs on the other hand may have as many sequence handlers as needed. This means that any number of sequences can be executed at the same time. The event sequences can, for example be used to set any type of I/O signals or variables, but they cannot control any robots. The robot programs can only be controlled by one sequence handler; this is to ensure that only one sequence handler is giving the robot orders so that no contradicting orders can be given.

The sequences are programmed through icon based programming, using flow charts. Each sequence starts with a start node including a start criterion containing the start conditions for the sequence. In a purpose sequence, a sequence can start if the other sequences associated with the same device are idle, and the start conditions of the start node are all true. When all the sequences of the device are idle, the start criteria of the sequences are tested round robin for one that is true, and a sequence will start to execute if the start criterion is true. In the event sequences the same round robin search is made, with the difference that every sequence with a true start criterion may start executing, as long as it is not already executing. This means that all sequences can be executed at the same time, if they all have start conditions that are true.

The start conditions of the sequences may contain any number of tests, where each test may, for example, check a certain variable or signal for specific value. The event sequences may also trigger on specific events, such as "production starting" or "production will pause". These kinds of events can be used, for example, to make sure that certain peripheral equipment is turned off when production is stopping.

The sequences are populated with program code using drag and drop from a toolbox of icons. Each icon represents an action that contains code for that action. When placing an icon in the sequences, the program is created and the behavior of the devices is defined. The icons can contain a wide variety of functionality, which means that each sequence can include different types of actions, giving a new and powerful way of programming. For programming a robot the same type of icon can be used for programming different robot programs. For example, when the user double-clicks on the robot program icon, a list of available robot program can be displayed to the user, which may choose between the available robot programs.

One node in the sequence may be a robot action, telling the robot to move in a certain position; the next action may be a read from a database, for example reading an order number. The node may also contain another sequence, called a subsequence, or it may contain a call to another sequence triggering it to start. This kind of mixing of different programming environments and functionality gives intuitive programs that are easy to read and understand.

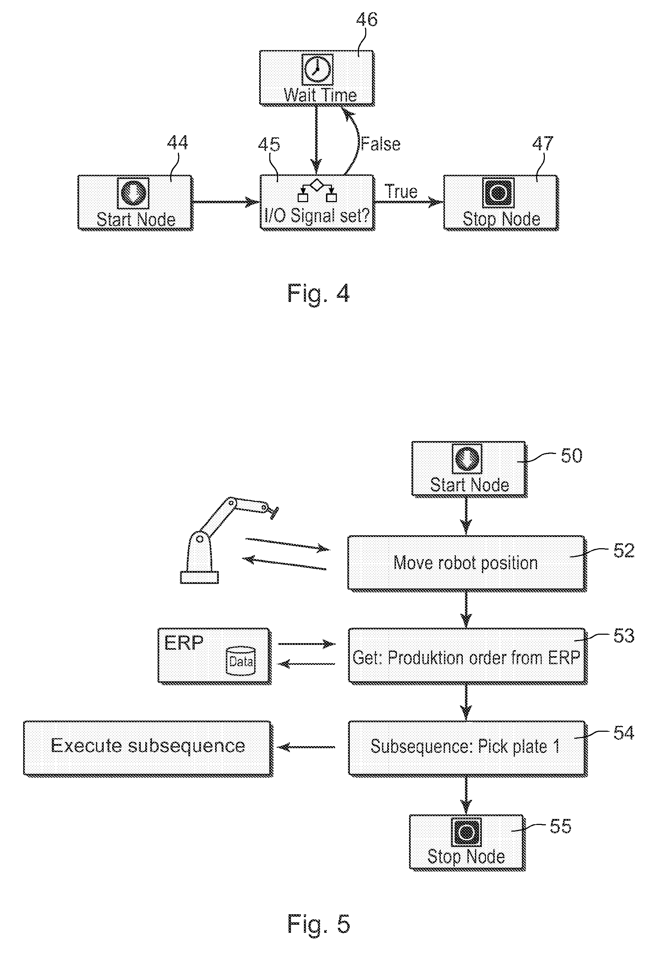

Figure 4 shows an example of the simple sequence of actions. The sequence includes a start node 44, including one or more conditions to be fulfilled in order to start execution of the sequence. The user can view the conditions, which are set, by double clicking on the icon. The sequence further includes a node displayed by an icon 45 representing an action "check if a certain I/O signal is set", a node displayed by an icon 46 representing the action "wait a certain time", and a third node displayed by an icon 47 representing the action "stop node". More information on the action represented by the icon, such as the set value of the waiting time, is displayed to the user if the user double clicks on the icon. The user may amend the settings through the icons, for example, by amending the settings displayed when double clicking on the icon. The node "check if I/O signal is set" includes one or more criteria to be examined if they are true or false. If they are true, the execution of the program code is following the arrow denoted "true", otherwise it follows the arrow denoted "falls". The node "wait time" stops the execution of the sequence during a certain time. The node "stop node" stops execution of the sequence.

There are different types of nodes which can be used in the sequences. Each node represents an action which determines what is happening in the work cell. The actions can for example be: set an I/O signal, wait a certain time, move a robot, call a robot program routine, or wait until a certain I/O has gained a certain value. Those actions can be dragged and dropped into the sequences. The different sequences can then be reused and called from each other in order to form more complex programs.

Figure 5 shows an example of a sequence that starts with a robot movement, thereafter a production order is read from a database, and thereafter a subroutine is started with a plurality of other actions programmed. This sequence contains five nodes: a start node 50, a move robot to a certain position 52 node, a read production order from a remote business system node 53, a node 54 including a call to a subsequence containing another sequence, and a stop node 55. A sequence may combine different types of actions in the same sequence. This means that a sequence may include nodes that both, for example, control a robot and read a production order from a business system. This further leads to more intuitive program in which the real flow in the work cell can be followed. It is also possible to set up a sequence that first read an order from a business system, and then order the robot to retrieve a specific article from an intermediate storage in dependence on which type of order is read from the business system. This makes it possible for the operator to see directly in the program what it is determining which type of article the robot is fetching.

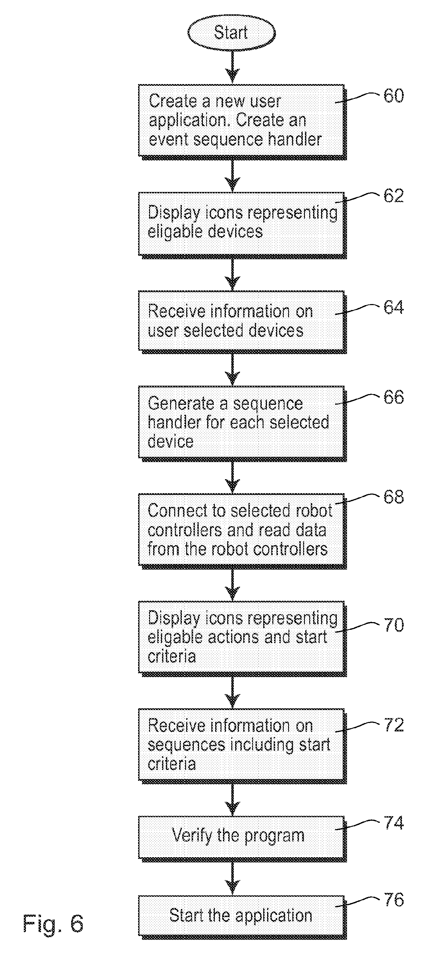

Figure 6 shows a flow diagram of the method and the computer program product according to an embodiment of the present invention. It will be understood that each block of the flow diagram can be implemented by computer program instructions. The first step, block 60, includes creating a new user application. When the creation of a new application has been initiated, an event sequence handler for handling sequences of actions, which are not related to the devices in the work cell, is generated.

When a new user application is to be created, a new empty workspace and a toolbox with icons representing eligible devices and robots are displayed on the display screen of the computer, block 62. The user selects devices to be included in the work cell by dragging and dropping symbols representing the devices into the workspace, thereby creating a view of the work cell. For example, the view of figure 3 is displayed on the display screen. Information on user-selected devices is received, block 64. For each selected device, a sequence handler is generated, block 66. If the selected device is a robot controller, the system is connected to the robot controller and reads controller data including information on I/O signals of the robot and available robot programs, block 68. The information on the robot programs includes the names of the robot programs.

When the apparatus has received information on the selected devices and has read information on available robot programs from the controllers, icons representing eligible actions and start criteria are displayed on the display device, block 70. The actions displayed can either be related to a specific device or general actions commonly used during programming, such as wait for a certain signal to be set, or wait a certain period of time, block 70. The start criterion is displayed as an icon denoted a start node. When the user activates the start node icon, for example by double clicking on it, a configuration dialog is displayed showing options of conditions which have to be fulfilled in order to start executing the sequence. The user only has to select one or more of the conditions and specify how it is fulfilled. When the user activates an icon representing a robot action, for example by double clicking on it, a configuration dialog is displayed showing the names of available robot programs. The user only has to select the desired robot program.

The user can easily create sequences of actions by drag and drop the icons displayed on the display screen and by selecting conditions to be fulfilled in order to start execution of the sequence. When the user has created a sequence he must associate it with one of the devices, or determine that it is an event sequence, which is not related to any of the devices. Information on the created sequences and selected start criteria is received and stored, block 72. Thereafter, the program is verified, block 74 and the application is started, block 76.

When production is started in the work cell, the apparatus is controlling the behavior of the workstation. The apparatus will execute the sequences created using the conditions that are stated in the nodes. The control system also monitors the state of the different processes and robot controllers and act if something is not working. If an error occurs, the system will enter a failure mode and notify the operator of the problem. The operator has a possibility to correct the problem and continue production from where it ended or to stop the production. If production is continued, the operator may choose where it shall restart in the sequences. During production, the created sequences are displayed on the graphical user interface in the form of flow diagrams including the selected icons. Each icon represents a node in the flow diagram.

When the program has been made, and it is time to put the work cell into production, the user application is used as an operator interface. The operator may start and stop production via the application. The production can also be paused so that the operator may enter the cell and do minor changes. The operator can also add maintenance plans in the application. Those are automatically controlled and warn the operator when something has to be maintained. The application can also automatically turn off production if an important maintenance has not been done. The application may also store statistics, which enables the operator to retrieve values on, for example availability and degree of utilization of the work cell. The operator can also set his own statistics to be shown, such as the number of produced orders per day. The I/O control devices are described in general terms based on its I/O signals. This means that different types of equipment can be used in the application and that it does not matter which supplier is used for delivering the device or which company has constructed it. The only thing that matters is that the device is controlled by I/O signals.

The visual part of the application enables the operator to have a good overview of what is programmed in the work cell. This also makes it possible for the operator to follow what is happening in the work cell during execution. It is important to be able to follow what is happening and also to see why something is happening. Programming through flow diagram is a good way to visualize the programs. The communication with the robot controller is implemented as a plug in interface to enable the user to choose freely the type of robot controller in the system.

Each node in the sequences has its own program code with instructions for carrying out the action represented by the node. As only the nodes are displayed, the program becomes easy to read and easy to interpret by an operator. Thereby, the original programming language can be hidden, for example in the robot controller, which makes it possible to execute different types of robots in the same work cell without confusing the operator. However, it is necessary to know the different programming language in order to change something in the underlying programs.

## Claims

1. A method for programming a work cell including one or more devices (1,4,8,9,10,11), wherein the method comprises:
storing for each of said devices one or more actions related to the device and program code for carrying out the actions,
generating a graphical user interface (30) displaying said actions and allowing a user to specify for each device one or more sequences of actions related to the device, and to specify a start criterion for each of the sequences, the start criterion including one or more conditions to be fulfilled in order to start executing the sequence, and
generating for each device a sequence handler (38-41) adapted to detect whether the start criterion of any of the sequences of the device is fulfilled, and to execute the sequence if the start criterion is fulfilled and all the other sequences associated with the device is idle.

2. The method according to claim 1, wherein said devices include one or more industrial robots (1,4), and at least some of said actions include carrying out robot movements, and the program code include robot programs.

3. The method according to claim 2, wherein the robot comprises a robot controller (3,6) controlling the movements of the robot, and the method comprises:
connecting to the robot controller, and
reading controller data including information on robot programs stored in the robot controller and displaying actions representing the robot programs on said graphical user interface.

4. The method according to any of the previous claims, wherein said devices include one or more I/O controlled devices (8-11), and said actions include actions for controlling the I/O controlled devices.

5. The method according to any of the previous claims, wherein the method comprises:
storing a plurality of actions, which is not related to any of the devices, and program code for carrying out the actions,
displaying said actions, which is not related to the devices, on said graphical user interface,
allowing a user to create one or more event sequences including one or more actions, which is not related to the devices, by selecting among said displayed actions, and to create a start criterion for each of said event sequences including one or more conditions to be fulfilled in order to start executing the event sequence, and
generating one or more event sequence handlers adapted to detect if the start criterion of any of the event sequences is fulfilled and to execute the event sequence if the start criterion is fulfilled.

6. The method according to any of the previous claims, wherein the method comprises: storing a plurality of icons representing said actions and displaying said icons on said graphical user interface, allowing a user to create one or more sequences of actions by selecting among said icons.

7. The method according to any of the previous claims, wherein the method comprises: storing one or more icons representing start criteria of the sequences and displaying said icons on said graphical user interface and allowing a user to select a start criterion and to specify the conditions to be fulfilled in order to start execution of the sequence through the icon.

8. The method according to claim 6 or 7, wherein the method comprises: displaying the created sequences on said graphical user interface, in the form of flow diagrams including said icons.

9. A computer program product for programming a work cell including one or more devices, which program product is directly loadable into the internal memory of a computer, comprising software for performing the steps of any of the claims 1-8.

10. A computer-readable medium, having a program for programming a work cell including one or more devices recorded thereon, where the program is to make a computer perform the steps of any of the claims 1-8 when said program is run on the computer.

11. An apparatus (12) for programming a work cell including one or more devices (1,4,8-11) wherein the apparatus comprises:
a memory location (20) for storing a set of actions related to the devices and program code for carrying out the actions,
a graphical user interface (30) displaying said actions and allowing a user to select for each device one or more sequences of actions related to the device, **characterized in that** the graphical user interface further allows a user to specify a start criterion for each of the sequences, the start criterion including one or more conditions to be fulfilled in order to start executing the sequence, and the apparatus further comprises a sequence handler generator (36) generating for each device a sequence handler (38-41) adapted to detect whether the start criterion of any of the sequences associated with the device is fulfilled, and to execute the sequence if the start criterion is fulfilled and all the other sequences associated with the device is idle.

12. The apparatus according to claim 11, wherein said devices include one or more industrial robots (1,4), and at least some of said actions include carrying out robot movements, and said program code include robot programs.

13. The apparatus according to claim 12, wherein the robot comprises a robot controller controlling the movements of the robot, the apparatus is operatively coupled to the robot controller, and the apparatus is adapted to read controller data including information on robot programs stored in the robot controller and displaying actions representing the robot programs on said graphical user interface.

14. The apparatus according to any of the claims 10-13, wherein said devices include one or more I/O controlled devices (8-11), the apparatus is operatively coupled to the robot controller, and said actions include actions for controlling the I/O controlled devices.

15. The apparatus according to any of the claims 10-14, wherein said memory location (20) is adapted to store a set of actions, which is not related to any of the devices, and program code for carrying out the actions, said graphical user interface (30) is adapted to display said actions, which is not related to the devices and to allow a user to create one or more event sequences including one or more actions, which is not related to the devices, by selecting among said displayed actions, and to create a start criterion for each of said event sequences, the start criterion including one or more conditions to be fulfilled in order to start executing the event sequence, and said sequence handler generator (36) is adapted to generate event sequence handlers (43) adapted to detect if the start criterion of any of the event sequences is fulfilled and to execute the event sequence if the start criterion is fulfilled.

16. The apparatus according to any of the claims 10-15, wherein said memory location (20) is adapted to store a plurality of icons representing said actions and one or more icons representing start criteria of the sequences, and said graphical user interface (30) is adapted to display said icons and to allow a user to create one or more sequences of actions by selecting among said icons.

17. The apparatus according to claim 16, wherein said graphical interface (30) is adapted to display the created sequences in the form of flow diagrams including said icons.
